# EUROPÄISCHE PATENTSCHRIFT

(11) **EP 3 496 982 B1**
(45) Veröffentlichungstag und Bekanntmachung des Hinweises auf die Patenterteilung: **01.07.2020**
(21) Anmeldenummer: 17748732.9
(22) Anmeldetag: 02.08.2017
(51) Int. Cl.: B60W 30/16, B60W 50/00, B60W 50/14

(54) **FAHRERASSISTENZSYSTEM IN EINEM KRAFTFAHRZEUG**
DRIVER ASSISTANCE SYSTEM IN A MOTOR VEHICLE
SYSTÈME D'AIDE À LA CONDUITE DANS UN VÉHICULE AUTOMOBILE

(30) Priorität: 12.08.2016 DE 102016215120
(43) Veröffentlichungstag der Anmeldung: 19.06.2019
(73) Patentinhaber: Bayerische Motoren Werke Aktiengesellschaft, 80809 München (DE)
(72) Erfinder: KNOLLER, Stefan, 80997 München (DE); LECHNER, Andreas, 80807 München (DE)
(86) Internationale Anmeldenummer: PCT/EP2017/069529
(87) Internationale Veröffentlichungsnummer: WO 2018/029056

(56) Entgegenhaltungen:
- EP-A2- 2 712 781
- WO-A2-2016/020484
- DE-A1-102007 005 245
- DE-A1-102010 006 442

## Beschreibung

Die Erfindung bezieht sich auf ein Fahrerassistenzsystem in einem Kraftfahrzeug zur Ermittlung einer Beschleunigungsstrategie und zur automatischen Umsetzung der Beschleunigungsstrategie.

Grundsätzlich sind bereits viele als Geschwindigkeitsregelsystem ausgestaltete Fahrerassistenzsysteme bekannt, welche die Geschwindigkeit des Kraftfahrzeugs auf eine vorgegebene Wunsch- bzw. Soll-Geschwindigkeit regeln. Neben diesen Längsregelsystemen können heute bereits bei einigen Herstellern auch um eine Abstandsregelung erweiterte Längsregelsysteme, sog. abstandsbezogene Längsregelsysteme bzw. Geschwindigkeitsregelsysteme erworben werden. Derartige - bspw. bei der Anmelderin der vorliegenden Patentanmeldung unter der Bezeichnung "Active Cruise Control" - angebotene Systeme ermöglichen es, das Kraftfahrzeug unter Einhaltung eines gewünschten Abstands zu einem vorausfahrendem Fahrzeug mit einer gewünschten oder einer entsprechend geringeren Geschwindigkeit automatisch zu führen. Erkennt eine am Kraftfahrzeug angebrachte Abstandssensorik, die insbesondere auf Radarbasis arbeiten kann, ein vorausfahrendes Zielobjekt bzw. (Kraft-)Fahrzeug in der eigenen Spur, so wird die eigene Geschwindigkeit - bspw. durch Veranlassen eines geeigneten Bremsmoments - an die Geschwindigkeit des vorausfahrenden Kraftfahrzeugs bzw. des Zielobjekts derart angepasst, dass eine in der "aktiven Fahrgeschwindigkeitsreglung" bzw. im entsprechenden Längsregelsystem enthaltene Abstandsregelung automatisch einen situationsgerechten Abstand zum vorausfahrenden Kraftfahrzeug bzw. Zielobjekt einregelt und einhält. Nach Beendigung der Folgefahrt wird wieder auf die vorgegebene Wunschgeschwindigkeit beschleunigt.

Weiter werden in neueren Fahrzeugen auch Fahrerassistenzsysteme angeboten, welche entweder aus Kartendaten eines Navigationssystems und/oder mittels Bildverarbeitung vorausschauend eine Geschwindigkeitsbegrenzung erkennen und dem Fahrer dauerhaft anzeigen können, so dass dieser selbständig bei Bedarf seine Geschwindigkeit an die Geschwindigkeitsbegrenzung anpassen kann (z. B. BMW Speed Limit Info).

Aus der DE 10 2008 018 421 A1 ist ein Fahrerassistenzsystem zum Senden und Empfangen von Geschwindigkeitsdaten und/oder Verkehrsdichtedaten zur Steuerung einer Geschwindigkeitsregelanlage bekannt, welches anhand der empfangenen Daten eine zulässige Höchstgeschwindigkeit ermittelt und diese dem Fahrer durch Ausgabe eines entsprechenden Hinweises mitteilt. Der Fahrer kann diese Vorgabe der zulässigen Geschwindigkeit durch eine einfache Betätigung für seine Geschwindigkeitsregelanlage übernehmen. Ebenso wird bei Ausfahrt aus der Geschwindigkeitslimitierung dies dem Fahrer angezeigt.

Aus der DE 10 2014 215 671 A1 ist ein Fahrerassistenzsystem bekannt, welches vorausliegende Ereignisse, die aufgrund einer Aufhebung einer aktuell gültige Geschwindigkeitsbegrenzung eine Erhöhung der aktuelle Geschwindigkeit erlauben, erkennt. Das Fahrerassistenzsystem umfasst weiter eine Funktionseinheit, welche bei Erkennen einer vorausliegenden Aufhebung einer Geschwindigkeitsbegrenzung eine zweistufige Beschleunigungsstrategie ermittelt, und dieses nach erfolgter Zulassung durch den Fahrer bereits vor dem Erreichen des die aktuelle Geschwindigkeitslimitierung aufhebenden vorausliegenden Ereignisses veranlasst. Dabei wird die erste Stufe der Beschleunigungsstrategie bis zum Erreichen des vorausliegenden Ereignisses, und die zweite Stufe der Beschleunigungsstrategie ab Erreichen des vorausliegenden Ereignisses umgesetzt. Die ermittelte Beschleunigungsstrategie ist kontinuierlich anpassbar.

Aufgabe der Erfindung ist nun, ein Fahrerassistenzsystem bereitzustellen, welches bei einer Beendigung einer Geschwindigkeitslimitierung eine für den Fahrer nachvollziehbare Beschleunigungsstrategie ermittelt und ggf. umsetzt.

Diese Aufgabe wird durch ein Fahrerassistenzsystem nach Patentanspruch 1 gelöst. Vorteilhafte Weiterbildungen ergeben sich aus den abhängigen Ansprüchen.

Das erfindungsgemäße Fahrerassistenzsystem umfasst im Wesentlichen zumindest zwei Kernelemente:
- ein Erfassungssystem zum Erkennen vorausliegender Ereignisse, die aufgrund einer Aufhebung einer aktuell gültigen Geschwindigkeitslimitierung eine Erhöhung der aktuellen Geschwindigkeit (auf eine neue höhere Zielgeschwindigkeit) erlauben, und
- eine Funktionseinheit zum Ermitteln einer zumindest zweistufigen Beschleunigungsstrategie zur Erhöhung der Geschwindigkeit, wenn aufgrund einer Aufhebung einer aktuell gültigen Geschwindigkeitslimitierung eine Erhöhung der aktuellen Geschwindigkeit erlaubt bzw. zugelassen ist, und zum Starten der Umsetzung der Beschleunigungsstrategie (frühestens) zu einem definierten Zeitpunkt und/oder definierten Ort vor Erreichen des vorausliegenden Ereignisses, wenn die Umsetzung der Beschleunigungsstrategie zugelassen ist.

Die relevanten vorausliegenden Ereignisse, welche eine Erhöhung der aktuellen Geschwindigkeit erlauben, können entweder aus Kartendaten eines Navigationssystems und/oder mittels Bildverarbeitung einer vorausschauenden Sensorik und/oder mittels einer Car-to-X-Kommunikationseinheit durch Empfang relevanter Daten von anderen Fahrzeugen oder von Verkehrszeichen oder Verkehrsleitsystemen erkannt werden. Bei den vorausliegenden Ereignissen kann es sich somit bspw. um die Aufhebung temporärer oder dauerhafter Geschwindigkeitsbegrenzungen handeln, welche entweder direkt auf einem Verkehrszeichen angegeben sind, oder aufgrund der allgemeinen Verkehrsregeln daraus abzuleiten sind (z. B. gilt in Deutschland bei einer Orts-Durchfahrt eine Geschwindigkeitsbegrenzung auf 50 km/h). Die für die Beschleunigungsstrategie maßgebliche Zielgeschwindigkeit nach dem Ort des vorausliegenden Ereignisses kann entweder die an das Aufhebungsschild anschließende (höhere) maximal erlaubte Geschwindigkeit oder eine um einen vorgegebenen Betrag nach oben oder unten abweichende Geschwindigkeit sein, wobei der Betrag und die Richtung der Abweichung bspw. durch den Fahrer in einem zentralen Fahrzeugmenü beeinflussbar sein kann. Ebenso kann die zu erreichende Geschwindigkeit auch eine vom Fahrer vorgegebene Wunsch- bzw. Sollgeschwindigkeit sein, insbesondere dann, wenn die vom Fahrer vorgegebene Wunsch- bzw. Sollgeschwindigkeit kleiner als eine nach dem die aktuelle Geschwindigkeitslimitierung aufhebenden Ereignis erlaubte Maximalgeschwindigkeit ist.

Die Umsetzung der Beschleunigungsstrategie kann grundsätzlich automatisch zugelassen bzw. freigegeben werden, d. h. das Fahrerassistenzsystem ist derart ausgebildet, dass dieses automatisch auf eine erkannte, vorausliegende Aufhebung der Geschwindigkeitslimitierung reagiert und die Geschwindigkeit entsprechend anpasst. Alternativ kann vorgesehen sein, dass das Fahrerassistenzsystem derart ausgebildet ist, dass die Umsetzung der ermittelten Beschleunigungsstrategie grundsätzlich erst dann zugelassen wird, wenn der Fahrer der automatischen Umsetzung zugestimmt hat. Hierzu kann vorgesehen sein, dass der Fahrer vorab in einem zentralen Einstellungsmenü angeben kann, dass er immer, oder bei bestimmten Situationen (z. B. auf bestimmten Straßenklassen, bei guten Wetterverhältnissen und/oder abhängig von weiteren Parametern) der automatischen Umsetzung zustimmt, oder dieser jeweils individuell bei Auftreten einer entsprechenden Fahrsituation zustimmen möchte. Zumindest in den Fällen, bei denen der Fahrer nicht einer automatischen Umsetzung vorab zugestimmt hat, sollte zusätzlich ein Hinweissystem zum Ausgeben eines Aufforderungshinweises an den Fahrer zum Zulassen einer automatischen Umsetzen der Beschleunigungsstrategie vorgesehen sein, so dass der Fahrer auf die Möglichkeit der Freigabe der automatischen Geschwindigkeitsanpassung hingewiesen wird. Erst wenn der Fahrer durch eine entsprechende Bestätigung des Aufforderungshinweises die automatische Umsetzung der Beschleunigungsstrategie zulässt, veranlasst die Funktionseinheit die automatische Umsetzung der Beschleunigungsstrategie durch Aussenden entsprechender Steuersignale an die Antriebs- und/oder Bremseinheit.

Die oben bereits genannte zumindest zweistufige Beschleunigungsstrategie setzt sich aus zumindest zwei Stufen zusammen, wobei die erste Stufe der Beschleunigungsstrategie maximal bis zu Ort des vorausliegenden Ereignisses und die zweite Stufe frühestens ab dem Ort des vorausliegenden relevanten Ereignisses umsetzbar ist. Mit anderen Worten wird somit am Ort des vorausliegenden Ereignisses, an dem die aktuell gültige Geschwindigkeitslimitierung aufgehoben wird, vom ersten Beschleunigungsprogramm (= erste Stufe der zweistufigen Beschleunigungsstrategie) auf ein zweites Beschleunigungsprogramm (= zweite Stufe der zweistufigen Beschleunigungsstrategie) umgeschaltet. Die erste Stufe kann dabei derart ausgestaltet sein, dass im Regelfall bei zugelassener Umsetzung die Beschleunigung genau so eingestellt wird, dass am Ort des Aufhebungsschildes die dort endende Geschwindigkeitslimitierung nicht (oder nur um einen geringen - ggf. einstellbaren - Betrag) überschritten wird. Das zweite Beschleunigungsprogramm wird dagegen nach dem Aufhebungsschild so eingestellt, dass die Beschleunigung auf die neue Zielgeschwindigkeit zum einen komfortabel erfolgt, gleichzeitig aber auch die Geschwindigkeitsdifferenz möglichst schnell eingeregelt wird. Mit einer entsprechend gewählten Beschleunigung in den beiden Beschleunigungsprogrammen kann somit sichergestellt werden, dass der Fahrer bis zum Aufhebungsschild bereits eine leichte Beschleunigung des Fahrzeugs erfährt und erst ab dem Aufhebungsschild eine Beschleunigung des Fahrzeugs auf die neue, höhere Zielgeschwindigkeit vorgenommen wird.

Im Gegensatz zur Beschleunigung in der ersten Stufe kann in der zweiten Stufe der zweistufigen Beschleunigungsstrategie eine derartige Beschleunigung veranlasst werden, dass eine nach Aufhebung der Geschwindigkeitslimitierung erlaubte oder gewünschte Zielgeschwindigkeit innerhalb kürzest möglicher Zeit oder innerhalb eines vorgegebenen Zeitfensters erreicht wird, wobei vorteilhafterweise eine vorgegebene maximale Beschleunigung nicht überschritten werden darf. Vorteilhafterweise kann dabei in der zweiten Stufe der zweistufigen Beschleunigungsstrategie die Beschleunigung in Abhängigkeit von der Differenzgeschwindigkeit aus aktueller Geschwindigkeit und einer nach Aufhebung der Geschwindigkeitslimitierung erlaubten oder gewünschten Zielgeschwindigkeit und/oder in Abhängigkeit eines aktuellen Betriebsmodus des Fahrzeugs (z. B. Sportmodus, Komfortmodus oder ECO-Modus) vorgegeben werden.

Vorteilhafterweise kann im Rahmen der zweistufigen Beschleunigungsstrategie bei der Vorgabe der Beschleunigung auch ein möglicher Eingriff in die Getriebesteuerung berücksichtigt werden, so dass eine vorgegebene bzw. gewollte Getriebesteuerung eingehalten wird. So kann in der ersten Stufe der zweistufigen Beschleunigungsstrategie eine derartige Beschleunigung angefordert werden, dass eine Rückschaltung des Getriebes des Fahrzeugs vermieden wird oder ein derartiger Eingriff in die Getriebesteuerung des Fahrzeugs vorgenommen werden, dass eine möglicherweise aufgrund des Beschleunigungswunsches vorliegende Rückschaltanforderung unterbunden wird. Im Gegensatz dazu kann in der zweiten Stufe der zweistufigen Beschleunigungsstrategie eine derartige Beschleunigung angefordert werden, dass eine Rückschaltung des Getriebes angefordert und umgesetzt wird, d. h. es wird bewusst eine Beschleunigung angefordert, die eine Rückschaltung des Getriebes erfordert. Damit wird die erste Beschleunigung sanft gestellt und erst am Ort des vorausliegenden Ereignisses (beim Übergang in die zweite Beschleunigungsstufe) durch die Rückschaltung ein entsprechender Dynamikeindruck unterstützt.

Grundsätzlich können bei der Ermittlung der Beschleunigungsstrategie neben den maßgeblichen Rahmenbedingungen wie z. B. Differenzgeschwindigkeit zwischen der aktuellen Geschwindigkeit und der Zielgeschwindigkeit, Abstand zum Ort des maßgeblichen vorausliegenden Ereignissen und/oder gewünschte Zielgeschwindigkeit auch weitere Kriterien berücksichtigt werden, welche einen Einfluss auf die Beschleunigungswirkung des Fahrzeugs haben. Bei den Einflussfaktoren kann es sich insbesondere um aktuelle Einflussfaktoren handeln, es können aber auch bereits bekannte, zukünftig auftretende und die Beschleunigung beeinflussende Einflussfaktoren, die bis zum Ort des vorausliegenden Ereignisses oder auch in der anschließenden Beschleunigungsphase auftreten werden, berücksichtigt werden. Bspw. kann es sich um die Straßenneigung, um Wind- und sonstige Wetterverhältnisse, die aktuelle Beladung des Fahrzeugs oder Ähnliches handeln.

Der Erfindung liegt nun folgende Erkenntnis zugrunde: Befindet sich das maßgebliche Fahrzeug in einer Verkehrssituation mit vorausliegender Aufhebung einer Geschwindigkeitsbegrenzung und befindet sich vor dem Fahrzeug ein weiteres Fahrzeug, das bereits (aufgrund der vorausliegenden Aufhebung der Geschwindigkeitsbegrenzung) sehr früh beschleunigt bzw. vor dem eigenen Kraftfahrzeug beschleunigt, so kann beim Fahrer des Fahrzeugs der Eindruck eines nicht situationsgerechten und trägen Beschleunigungsverhaltens des Fahrerassistenzsystem entstehen. Um einem derartigen Eindruck entgegen zu wirken, ist erfindungsgemäß vorgesehen, dass in der ersten Stufe der zweistufigen Beschleunigungsstrategie der umzusetzende Beschleunigungsverlauf und/oder die maximal erlaubte Beschleunigung in Abhängigkeit eines Beschleunigungsverhaltens eines vorausfahrenden relevanten Zielobjekts ermittelt und/oder veranlasst wird. Im Sinne eines definierten Beschleunigungsverhaltens des Zielobjekts ist nicht die bei der herkömmlichen Abstandsregelung zu berücksichtigende Beschleunigung, die grundsätzlich zu beachten ist, zu verstehen, sondern eine explizit definiertes Beschleunigungsverhalten, also eine definierte Art des Beschleunigungsverhaltens.

Vorteilhafterweise wird dabei in der ersten Stufe der zweistufigen Beschleunigungsstrategie der umzusetzende Beschleunigungsverlauf kontinuierlich bzw. adaptiv in Abhängigkeit des erkannten definierten Beschleunigungsverhaltens des vorausfahrenden Zielobjekts vor Erreichen des vorausliegenden Ereignisses, insbesondere in Abhängigkeit des erkannten definierten Beschleunigungsverhaltens des vorausfahrenden Zielobjekts während eines definierten Zeit- und/oder Streckenintervalls vor Erreichen des vorausliegenden Ereignisses ermittelt und/oder veranlasst. Das Zeit- und/oder Streckenintervall kann derart definiert sein, dass dieses frühestens ab dem Ort oder Zeitpunkt, zu dem das vorausliegende Ereignis erkannt wird oder zu dem eine Umsetzung einer zuvor ermittelten Beschleunigungsstrategie gestartet werden könnte oder gestartet wird, beginnt, und mit Erreichen des Orts und/oder des Zeitpunkt, zudem das relevante Ereignis erreicht wird, endet. Mit anderen Worten ausgedrückt wird eine entsprechend früh eingeleitete und/oder große Beschleunigung des vorausfahrenden Zielobjekts bei der Ermittlung der Beschleunigungsstrategie, insbesondere bei der Ermittlung des umzusetzenden Beschleunigungsverhaltens in der ersten Stufe der Beschleunigungsstrategie nur dann berücksichtigt, wenn die Beschleunigung vor Erreichen des relevanten Ereignisses, insbesondere während eines definierten Zeit- und/oder Streckenintervalls vor Erreichen des relevanten Ereignisses erfolgt.

In einer vorteilhaften Weiterbildung der Erfindung kann bei Erkennen eines vorausfahrenden relevanten Zielobjekts, das (vor Erreichen des erkannten relevanten Ereignisses) ein den Grad der Beschleunigung charakterisierendes Merkmal erfüllt, in der ersten Stufe der Beschleunigungsstrategie eine größere Beschleunigung des Fahrzeugs zugelassen und umgesetzt werden, als bei nicht vorhandenem Zielobjekt oder bei vorhandenem Zielobjekt, das ein den Grad der Beschleunigung charakterisierendes Kriterium nicht erfüllt. Ein den Grad der Beschleunigung charakterisierendes Kriterium kann z. B. dann erfüllt sein, wenn das relevante Zielobjekt wesentlich, also im erheblichen Maße beschleunigt. Im Sinne eines wesentlich beschleunigenden Zielobjekts kann z. B. ein vorausfahrendes Fahrzeug verstanden werden, welches zumindest derart beschleunigt, dass eine eigene Beschleunigung des Fahrzeugs vor Erreichen des relevanten Ereignisses möglich wäre bzw. eine eigene höhere Beschleunigung möglich wäre, als sie (zuvor) für die erste Stufe der Beschleunigungsstrategie ermittelt wurde. Mit anderen Worten ausgedrückt wird geprüft, ob die Beschleunigung des vorausfahrenden Fahrzeugs bzw. Zielobjekts größer als die vermittelte (bis dato erlaubte) Beschleunigung des eigenen Fahrzeugs ist.

So kann bei Erkennen eines vorausfahrenden relevanten Zielobjekts, das ein den Grad der Beschleunigung charakterisierendes Kriterium erfüllt, bevor die Umsetzung der Beschleunigungsstrategie gestartet wurde und/oder während die erste Stufe der Beschleunigungsstrategie umgesetzt wird, die erste Stufe der Beschleunigungsstrategie derart ermittelt bzw. angepasst werden, dass eine frühere und/oder größere Beschleunigung des Fahrzeugs bis zum Erreichen des relevanten Orts zugelassen bzw. vorgegeben und/oder umgesetzt wird, als bei nicht vorhandenem Zielobjekt oder bei vorhandenem Zielobjekt, das das ein den Grad der Beschleunigung charakterisierendes Kriterium nicht erfüllt.

Bei einer Erhöhung der Beschleunigung des eigenen Fahrzeugs während der ersten Stufe der Beschleunigungsstrategie aufgrund eines derart beschleunigenden Zielobjekts, das ein den Grad der Beschleunigung charakterisierendes Kriterium erfüllt, kann vorteilhafterweise die maximal zugelassene Beschleunigung und/oder die vorgegebene und veranlasste größere Beschleunigung in Abhängigkeit weiterer Parameter, insbesondere in Abhängigkeit vom gewählten Fahrmodus des Fahrzeugs (z. B. ECO, NORMAL oder SPORT) und/oder der Distanz des eigenen Kraftfahrzeugs oder des wesentlich beschleunigenden Zielobjekts zum vorausliegenden relevanten Ereignis und/oder der Zeitdauer, bis das eigene Kraftfahrzeug oder das Zielobjekt vermutlich das vorausliegende relevante Ereignis erreicht, und/oder der Differenzgeschwindigkeit zwischen dem eigenen Kraftfahrzeug und dem Zielobjekt und/oder der Differenzbeschleunigung zwischen dem Kraftfahrzeug und dem Zielobjekt vorgegeben werden.

Erfindungsgemäß wird während der ersten Stufe der Beschleunigungsstrategie bei "wesentlich" beschleunigendem Zielobjekt vor Erreichen des relevanten Ereignisses eine derartige Beschleunigung veranlasst, dass am Ort des relevanten Ereignisses die dort aufgehobene Geschwindigkeitslimitierung um eine vorgegebenen Geschwindigkeitsbetrag überschritten wird, wobei der Geschwindigkeitsbetrag bzw. die zu erreichende Geschwindigkeit am Ort des relevanten Ereignisses (ebenfalls) in Abhängigkeit des definierten Beschleunigungsverhaltens des Zielobjekts (vor bzw. bis zum Ort des relevanten Ereignisses) vorgegeben werden kann. Vorteilhafterweise ist der Geschwindigkeitsbetrag dabei größer, als bei nicht vorhandenem Zielobjekt oder bei vorhandenem Zielobjekt, das ein den Grad der Beschleunigung charakterisierendes Kriterium nicht erfüllt, d. h. es wird eine (größere) Geschwindigkeit am Ort des relevanten Ereignisses zugelassen bzw. erreicht, als bei nicht "wesentlich" beschleunigendem Zielobjekt. In einer Weiterbildung dieser Ausgestaltungsvariante kann der Geschwindigkeitsbetrag bei wesentlich beschleunigendem Zielobjekt auch in Abhängigkeit weiterer Parameter, insbesondere in Abhängigkeit vom gewählten Fahrmodus des Fahrzeugs (z. B. ECO, NORMAL oder SPORT) und/oder der Distanz des eigenen Kraftfahrzeugs oder des wesentlich beschleunigenden Zielobjekts zum vorausliegenden relevanten Ereignis und/oder der Zeitdauer, bis das eigene Kraftfahrzeug oder das Zielobjekt vermutlich das vorausliegende relevante Ereignis erreicht, und/oder der Differenzgeschwindigkeit zwischen dem eigenen Kraftfahrzeug und dem Zielobjekt und/oder der Differenzbeschleunigung zwischen dem Kraftfahrzeug und dem Zielobjekt vorgegeben werden.

Der Vollständigkeit halber ist noch zu erwähnen, dass die zweite Stufe der Beschleunigungsstrategie stets unabhängig vom erkannten Beschleunigungsverhalten, insbesondere auch bei erkanntem definiertem Beschleunigungsverhalten stets gleich ermittelte wird.

Die Erfindung wird nun anhand nachfolgenden Ausführungsbeispiels näher erläutert. Dabei zeigt
Fig. 1 einen beispielhaften Aufbau einer Fahrerassistenzsystems in einem Kraftfahrzeug zur Ermittlung einer Beschleunigungsstrategie und automatischer Umsetzung der Beschleunigungsstrategie,
Fig. 2 einen Beschleunigungsverlauf des eigenen Fahrzeugs bei eine Aufhebung einer Geschwindigkeitslimitierung und vorhandenem Zielobjekt mit erkanntem definierten Beschleunigungsverhalten vor Erreichen des relevanten Ereignisses, und
Fig. 3 mehrere Beispiele ermittelter und automatisch umgesetzter Beschleunigungsstrategien mit und ohne wesentlich beschleunigendem Zielobjekt.

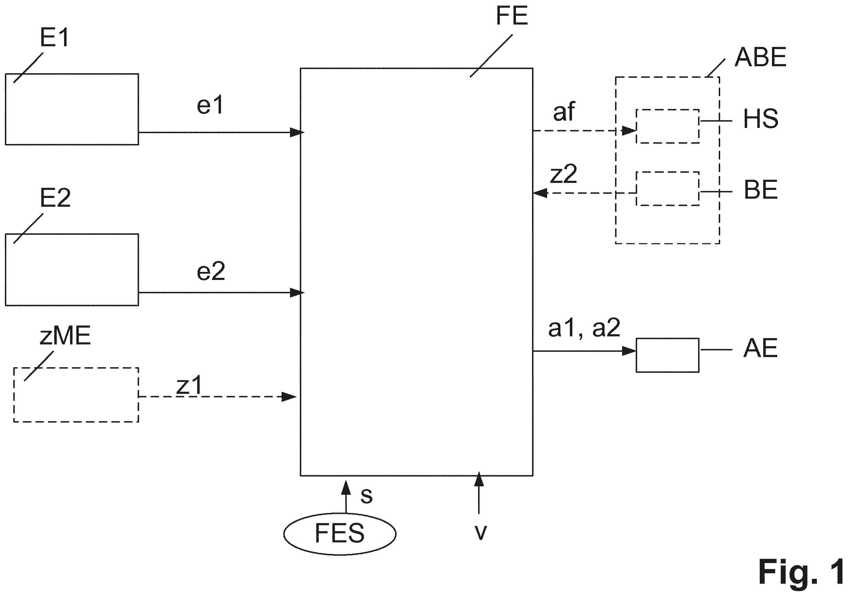

Im Detail zeigt die Fig. 1 als zentrales Element des Fahrerassistenzsystems eine Funktionseinheit FE, welche Eingangssignale e1 einer ersten Erfassungseinheit E1, Eingangssignale e2 einer zweiten Erfassungseinheit E2, ein Geschwindigkeitssignal v, ein Statussignal s eines Fahrerlebnisschalters FES und (optional) ein Zulassungssignal z1 oder z2 zum Zulassen einer automatischen Umsetzung einer ermittelten Beschleunigungsstrategie erhält.

Bei der ersten Erfassungseinheit E1 kann es sich bspw. um eine am Fahrzeug angebrachte und nach vorne ausgerichtete (Video-) Sensorik handeln, welche vorausliegende, eine Geschwindigkeitsbegrenzung aufhebende Ereignisse, die eine Erhöhung der aktuellen Geschwindigkeit auf eine höhere Zielgeschwindigkeit zulassen, und vorausfahrende relevante Zielfahrzeuge erkennt. Bei der zweiten Erfassungseinheit E2 kann es sich bspw. um ein fahrzeuginternes Navigationssystem handeln, welches in Abhängigkeit der bekannten Position des Fahrzeugs und einem vorausliegenden Streckenabschnitt vorausliegende, eine Geschwindigkeitsbegrenzung aufhebende Ereignisse erkennt. Sowohl die erste Erfassungseinheit E1 als auch die zweite Erfassungseinheit E2 sind derart ausgestaltet, dass sie zum einen den Ort des vorausliegenden, eine Geschwindigkeitsbegrenzung aufhebende Ereignisses, also auch die Höhe der tatsächliche Geschwindigkeitsbegrenzung erkennen und an die Funktionseinheit FE weitergeben können. Idealerweise erkennen die Erfassungseinheiten E1 oder E2 auch eine nach der Aufhebung der aktuellen Geschwindigkeitslimitierung geltende neue zulässige Höchstgeschwindigkeit. Alternativ kann anstelle der neuen zugelassenen Höchstgeschwindigkeit auch eine vom Fahrer vorgegebene gewünschte (neue) Höchstgeschwindigkeit an die Funktionseinheit FE übertragen werden.

Weiter erhält die Funktionseinheit FE von einer im Fahrzeug angeordneten zentralen Menüeinheit zME bei entsprechender Auswahl durch den Fahrer ein Signal z1, welches angibt, dass der Fahrer grundsätzlich eine automatische Umsetzung der ermittelten Beschleunigungsstrategie wünscht. Alternativ kann der Fahrer jedoch auch auswählen, dass die Umsetzung der ermittelten Beschleunigungsstrategie nicht grundsätzlich automatisch erfolgt (es wird kein Signal z1 an die Funktionseinheit gesendet), sondern erst dann, wenn der Fahrer dies bei entsprechender Verkehrssituation durch Betätigung des Bedienelements BE zulässt. Dabei würde der Fahrer rechtzeitig vor Erreichen einer entsprechend relevanten Situation in einem in einer Anzeigebedieneinheit ABE integrierten Hinweissystem HS durch Aussenden eines Signals af einen Hinweis zur bevorstehenden Möglichkeit einer automatischen Anpassung der Geschwindigkeit aufgrund des vorausliegenden relevanten Ereignisses erhalten. Während der Ausgabe des Hinweise kann der Fahrer durch Betätigung eines dafür vorgesehenen Bedienelements BE die Aufforderung bestätigen und die automatische Umsetzung der ermittelten Beschleunigungsstrategie zulassen (Signal z2).

Schließlich erhält die Funktionseinheit FE noch weitere relevante Daten s, aus denen sie ermitteln kann, welcher Fahrmodus aktuelle gewählt ist. Als Beispiel ist hier die Funktionseinheit FE mit einem sog. Fahrerlebnisschalter FES verbunden, mittels dem der Fahrer einen Betriebsmodus des Fahrzeugs auswählen kann. Hat der Fahrer bspw. den Sportmodus ausgewählt, so wünscht er grundsätzlich eine schnellere Beschleunigung und ggf. auch eine größere Geschwindigkeitsüberschreitung der erlaubten Maximalgeschwindigkeit am Ort des Aufhebungsschildes, als wenn der Fahrer einen sog. Eco-Modus gewählt hat, bei dem er besonders verbrauchssparend fahren und auch beschleunigen möchte.

Sobald der Funktionseinheit FE relevante Daten e1 und/oder e2 über ein vorausliegendes, eine Geschwindigkeitsbegrenzung aufhebende Ereignis und Informationen über die nach dem Aufhebungsschild gewünschte neue Zielgeschwindigkeit vorliegen, kann die Funktionseinheit FE zunächst die (Zwischen-)Zielgeschwindigkeit am Ort des vorausliegenden Ereignisses, welche ggf. um einen bestimmten Geschwindigkeitsbetrag als die zuvor geltende Geschwindigkeitslimitierung höher sein kann, ermitteln und anschließend in Abhängigkeit von der erlaubten Beschleunigung in einer ersten Beschleunigungsstufe, die bis zum Erreichen des Aufhebungsschildes umgesetzt werden soll, unter Berücksichtigung des gewählten Fahrmodus s eine Beschleunigungsstrategie für die erste Beschleunigungsstufe bis zum Erreichen des vorausliegenden Ereignisses, und eine Beschleunigungsstrategie für eine zweite Stufe, die ab Erreichen des relevanten Ereignisses umgesetzt werden soll, ermitteln.

Bereits ab dem Zeitpunkt der Erkennung des vorausliegenden relevanten Ereignisses überwacht die Funktionseinheit FE kontinuierlich, ob sich vor dem eigenen Fahrzeug ein relevantes Zielobjekt befindet, welches vor Erreichen des relevanten Ereignisses ein den Grad der Beschleunigung charakterisierendes Kriterium erfüllt, also z. B. wesentlich beschleunigt. Eine wesentliche Beschleunigung wird erkannt, wenn die Beschleunigung des relevanten Zielobjektes die reduzierte Beschleunigung des eigenen Fahrzeuges übersteigt. Nachfolgend wird stets auf ein "wesentlich beschleunigendes Zielobjekt" Bezug genommen, wobei jedoch auch jede andere Art darunter zu subsumieren ist, bei der das Zielobjekt ein den Grad der Beschleunigung charakterisierendes Kriterium erfüllt.

Wird anhand der Daten e1 (und e2) eine derartige Situation mit wesentlich beschleunigendem Zielobjekt erkannt, wird dieses bei der Ermittlung der ersten Stufe der Beschleunigungsstrategie berücksichtigt. Insbesondere wird bei Erkennen einer derartigen Situation die erste Stufe der Beschleunigungsstrategie derart ermittelt bzw. angepasst, dass bereits vor (falls die Umsetzung der Beschleunigungsstrategie noch nicht gestartet wurde)- oder spätestens an dem - zuvor angedachten Ort eine größere Beschleunigung zugelassen bzw. eingeleitet wird, also bei einer Verkehrssituation mit nicht erkanntem wesentlich beschleunigendem Fahrzeug. Beschleunigt ein relevantes Zielobjekt erst dann "wesentlich", wenn mit der Umsetzung bereits gestartet wurde, so wird die zuvor ermittelte und bereits gestartete erste Stufe der Beschleunigungsstrategie entsprechend angepasst, so dass eine stärkere als zuvor ermittelte bzw. vorgegebene Beschleunigung des Fahrzeug eingeleitet wird.

Bei der der Ermittlung der Beschleunigungsstrategie, insbesondere bei der Ermittlung der ersten Stufe der Beschleunigungsstrategie wird die am Ort des relevanten Ereignisses maximal erlaubte Höchstgeschwindigkeit ebenfalls in Abhängigkeit vom Vorhandensein eines erkannten wesentlich beschleunigenden Zielobjekts angepasst. So kann z. B. bei erkanntem wesentlich beschleunigendem Zielobjekt eine höhere maximal erlaubte Höchstgeschwindigkeit zugelassen werden, als bei Verkehrssituationen mit nicht wesentlich beschleunigendem Zielobjekt.

Abhängig von der ermittelten und ggf. an geänderte Rahmenbedingungen angepassten Beschleunigungsstrategie veranlasst die Funktionseinheit zum ermittelten Startzeitpunkt den Umsetzungsbeginn der Beschleunigungsstrategie durch eine Signal a1 an die Antriebseinheit AE, wenn diese zugelassen ist (Signal z1 oder z2 liegt vor). Falls zum Zeitpunkt, zu dem der Fahrer die automatische Umsetzung durch Betätigung des Bedienelement BE zulässt, die Distanz zwischen dem Fahrzeug und dem Aufhebungsschild sehr kurz ist, so dass eine Erreichung der etwas höheren (Zwischen-)Zielgeschwindigkeit nur mit großer Beschleunigung möglich wäre, kann auch unabhängig von der erlaubten (Zwischen-) Zielgeschwindigkeit am Ort des Aufhebungsschildes das Fahrzeug nur mit einer geringeren Beschleunigung beschleunigt werden.

Sobald das Aufhebungsschild erreicht ist, veranlasst die Funktionseinheit FE eine Umsetzung der (zuvor) ermittelten zweiten Stufe der zweistufigen Beschleunigungsstrategie durch Aussenden eines zweiten Beschleunigungssignals a2 an die Antriebseinheit AE, so dass die Zielgeschwindigkeit entsprechend den Bedürfnissen des Fahrers und unter Berücksichtigung einer maximal erlaubten Beschleunigung innerhalb kürzester Zeit erreicht wird.

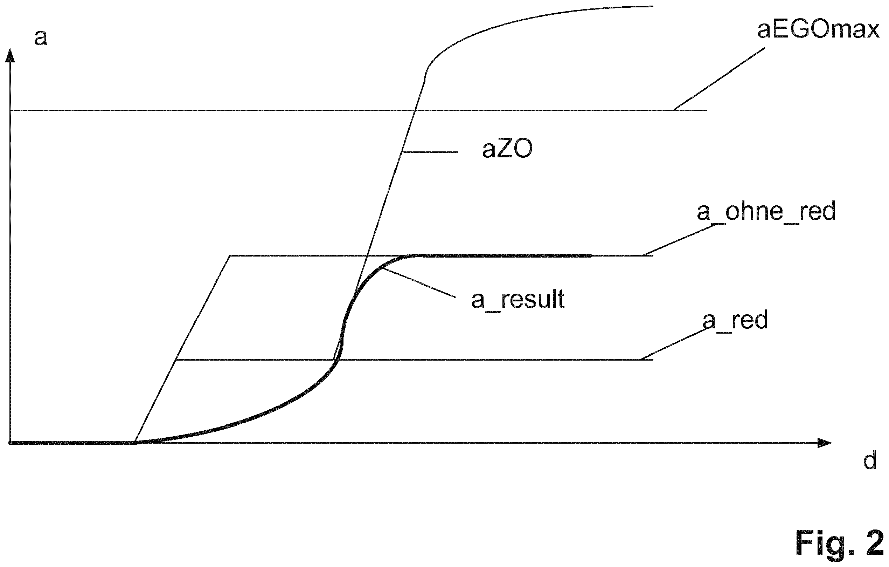

Die Fig. 2 zeigt einen automatisch veranlassten Beschleunigungsverlauf des eigenen Fahrzeugs bei eine Aufhebung einer Geschwindigkeitslimitierung und vorhandenem Zielobjekt mit erkanntem definiertem Beschleunigungsverhalten vor Erreichen des relevanten Ereignisses.

In dem über eine Strecke d und eine Beschleunigung a des Fahrzeugs aufgespannten Kennfeld zeigt die Linie aEGOmax die maximal erlaubte Beschleunigung bei automatischen Beschleunigungsvorgängen. Die Linie a_red zeigt die maximal zugelassene automatische Beschleunigung des Fahrzeugs bei erkannter Aufhebung einer Geschwindigkeitslimitierung und zugelassener automatischer Beschleunigung bis zum Erreichen des Endes der Geschwindigkeitslimitierung, also in der ersten Stufe der Beschleunigungsstrategie, unter der Voraussetzung, dass kein vorausfahrendes Zielobjekt vorhanden ist oder ein kein vorausfahrendes Zielobjekt mit definiertem, wesentlichen Beschleunigungsverhalten erkannt wird. Wird jedoch während der ersten Beschleunigungsstufe, also vor Erreichen des die Geschwindigkeitslimitierung aufhebenden Ereignisses ein Zielobjekt mit einem definierten, wesentlichem Beschleunigungsverhalten erkannt, wird eine größere Beschleunigung des Fahrzeugs in der ersten Beschleunigungsstufe zugelassen. Die größere maximal zugelassene Beschleunigung ist durch die Linie a_ohne_red gekennzeichnet.

Die Beschleunigungskennlinie aZO zeigt nun ein Beschleunigungsverhalten eines vorausfahrenden Zielobjekts. Die Beschleunigungskennlinie a_result zeigt einen Beschleunigungsverlauf des eigenen Fahrzeugs, der sich einstellt, wenn während der Umsetzung der ersten Stufe der Beschleunigungsstrategie erkannt wird, dass ein vorausfahrendes Zielobjekt entsprechend dem dargestellten Beschleunigungsverhalt aZO derart beschleunigt, dass die Beschleunigung des Zielobjekt größer ist, als die (vorrangig) maximal erlaubte reduzierte Beschleunigung a_red während der Umsetzung der Beschleunigungsstrategie.

Zunächst beschleunigt dabei das eigene Fahrzeug in gleicher Weise wie das vorausfahrende Zielobjekt. Überschreitet das Zielobjekt jedoch nicht nur die maximal zugelassene reduzierte Beschleunigung a_red (die bei nicht vorhandenem oder nicht wesentlich beschleunigendem Zielobjekt die Obergrenze der maximal zugelassenen Beschleunigung bildet), sondern auch die maximal zugelassene Beschleunigung a_ohne_red, die auch bei erkanntem wesentlich beschleunigendem Zielobjekt nicht überschritten werden darf, wird die Beschleunigung a_result des eigenen Fahrzeugs derart verändert, dass das Fahrzeug nicht mehr im gleichen Maße wie das Zielobjekt beschleunigt wird, sondern lediglich mit der nun geltenden höheren maximal zugelassenen Beschleunigung a_ohne_red.

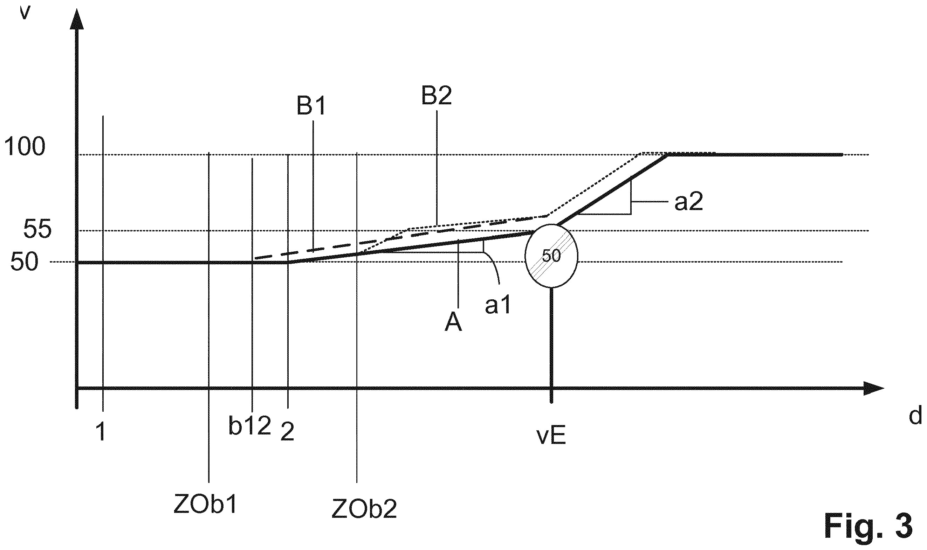

Anhand der nachfolgenden Beschreibung zu Fig. 3 werden nun mehrere Beispiele umgesetzter zweistufiger Beschleunigungsstrategien dargestellt. Die Fig. 3 zeigt eine Strecke d, wobei am Ort vE ein Aufhebungsschild einer Geschwindigkeitsbegrenzung von 50 km/h angeordnet ist. Nach dem Aufhebungsschild soll mit einer vom Fahrer vorgegebenen Zielgeschwindigkeit von 100 km/h gefahren werden.

Weiter wird davon ausgegangen, dass sich das dem Aufhebungsschild annähernde Fahrzeug mit einer konstanten Geschwindigkeit von 50 km/h bewegt. Schließlich wird auch davon ausgegangen, dass der Fahrer durch eine entsprechende Fahrzeugeinstellung grundsätzlich eine automatische Anpassung der Geschwindigkeit aufgrund erkannter relevanter Ereignisse wünscht.

Zum Zeitpunkt, an dem das Fahrzeug die Position "1" erreicht hat, wird das vorausliegende Ereignis vE erkannt und eine entsprechende Beschleunigungsstrategie zum Anpassen der Fahrzeuggeschwindigkeit ermittelt, um die nach dem Aufhebungsschild gültige (Soll-) Geschwindigkeit zu erreichen.

Im ersten Beispiel (durchgezogene Linie A) wird davon ausgegangen, dass eine Verkehrssituation ohne vorausfahrendem Zielobjekt vorliegt. Hier wird am Ort "2" mit der automatischen Umsetzung der ermittelten Beschleunigungsstrategie gestartet. Dabei beschleunigt das Fahrzeug zunächst mit einer vorgegebenen ersten Beschleunigung a1, so dass am Ort vE des Aufhebungsschildes eine geringe Überschreitung der zulässigen Maximalgeschwindigkeit (50 km/h) erreicht wird. Ab dem Ort vE des Aufhebungsschildes wechselt die Funktionseinheit von der ersten Beschleunigungsstufe in die zweite Beschleunigungsstufe. Im Rahmen dieser zweiten Beschleunigungsstufe wird das Fahrzeug mit einer gegenüber der ersten Beschleunigung a1 erhöhten Beschleunigung a2 beschleunigt, so dass die gewünschte Zielgeschwindigkeit vom 100 km/h innerhalb einer sehr kurzen Zeit erreicht wird. Die Höhe der ersten oder zweiten Beschleunigung a1 bzw. a2 kann entweder fest oder in Abhängigkeit des aktuellen Betriebsmodus vorgegeben werden.

Im zweiten Beispiel (gestrichelte Linie B1) wird davon ausgegangen, dass eine Verkehrssituation mit vorausfahrenden Zielobjekt vorliegt, wobei das Zielobjekt an der Position ZOb1 wesentlich, also im erhöhten Maße beschleunigt. Aufgrund des wesentlich beschleunigenden Zielobjekts wird die bereits zuvor ermittelte 1. Stufe der Beschleunigungsstrategie derart angepasst, dass bereits vor dem Ort 2, nämlich am Ort b12 mit der automatischen Umsetzung der angepassten Beschleunigungsstrategie gestartet werden kann. Dabei beschleunigt das Fahrzeug zunächst mit einer entsprechend höheren Beschleunigung als im Beispiel 1, so dass am Ort vE des Aufhebungsschildes eine höhere Überschreitung der zulässigen Maximalgeschwindigkeit (immer noch 50 km/h) erreicht wird. Ab dem Ort vE des Aufhebungsschildes wechselt die Funktionseinheit von der ersten Beschleunigungsstufe in die zweite Beschleunigungsstufe, die identisch mit der zweiten Beschleunigungsstufe aus dem Beispiel A ist.

Im dritten Beispiel (gepunktete Linie B2) wird davon ausgegangen, dass eine Verkehrssituation mit vorausfahrenden Zielobjekt vorliegt, wobei das Zielobjekt an der Position ZOb2 wesentlich, also im erhöhten Maße beschleunigt. Diese wesentliche Beschleunigung des Zielobjekts tritt somit erst ein, wenn bereits mit der Umsetzung der (zuvor) ermittelten Beschleunigungsstrategie am Ort 2 begonnen wurde. Hierbei wird unmittelbar oder zeitnahe nach dem Erkennen der wesentlichen Beschleunigung des Zielobjekts die erste Stufe der Beschleunigungsstrategie derart angepasst, dass eine (im Vergleich zum Beispiel A) höhere Beschleunigung zugelassen und umgesetzt wird. Analog dem Beispiel B1 wird auch in diesem Beispiel zugelassen, dass am Ort vE des Aufhebungsschildes eine höhere Überschreitung der zulässigen Maximalgeschwindigkeit (immer noch 50 km/h) erreicht wird. Ab dem Ort vE des Aufhebungsschildes wechselt die Funktionseinheit von der ersten Beschleunigungsstufe in die zweite Beschleunigungsstufe, die identisch mit der zweiten Beschleunigungsstufe aus dem Beispiel A ist.

## Patentansprüche

1. Fahrerassistenzsystem in einem Kraftfahrzeug mit
- einem Erfassungssystem zum Erkennen vorausliegender Ereignisse, die aufgrund einer Aufhebung einer aktuell gültigen Geschwindigkeitslimitierung eine Erhöhung der aktuellen Geschwindigkeit erlauben, und
- einer Funktionseinheit zum Ermitteln einer zumindest zweistufigen Beschleunigungsstrategie zur Erhöhung der Geschwindigkeit, wobei die erste Stufe der Beschleunigungsstrategie maximal bis zum Ort des vorausliegenden Ereignisses und die zweite Stufe der Beschleunigungsstrategie frühestens ab dem Ort des vorausliegenden Ereignisses umsetzbar ist, und die Umsetzung zu einem definierten Zeitpunkt und/oder Ort vor Erreichen des vorausliegenden Ereignisses gestartet wird, wenn die Umsetzung der Beschleunigungsstrategie zugelassen ist,
**dadurch gekennzeichnet, dass** in der ersten Stufe der zweistufigen Beschleunigungsstrategie der umzusetzende Beschleunigungsverlauf (A, B1, B2) in Abhängigkeit eines erkannten definierten Beschleunigungsverhaltens eines vorausfahrenden relevanten Zielobjekts derart ermittelt und/oder veranlasst wird, dass am Ort des vorausliegenden Ereignisses (vE) die dort aufgehobene Geschwindigkeitslimitierung um einen vorgegebenen Geschwindigkeitsbetrag überschritten wird, wobei der Geschwindigkeitsbetrag in Abhängigkeit des definierten Beschleunigungsverhaltens des vorausfahrenden Zielobjektes bis zum Erreichen des relevanten Ortes vorgegeben wird.

2. Fahrerassistenzsystem nach Anspruch 1, **dadurch gekennzeichnet, dass** in der ersten Stufe der zweistufigen Beschleunigungsstrategie der umzusetzende Beschleunigungsverlauf (A, B1, B2) in Abhängigkeit des definierten Beschleunigungsverhaltens eines vorausfahrenden Zielobjekts während eines definierten Zeit- und/oder Streckenintervalls vor Erreichen des vorausliegenden Ereignisses (vE) ermittelt und/oder veranlasst wird.

3. Fahrerassistenzsystem nach einem der vorangegangenen Ansprüche, **dadurch gekennzeichnet, dass** ein definiertes Beschleunigungsverhalten des vorausfahrenden Zielobjekts bei Erkennen eines vorausfahrenden relevanten Zielobjekts, das ein den Grad der Beschleunigung charakterisierendes Kriterium erfüllt, erkannt wird.

4. Fahrerassistenzsystem nach Anspruch 3, **dadurch gekennzeichnet, dass** ein den Grad der Beschleunigung charakterisierendes Kriterium die relative Beschleunigung des Zielobjekts zur ermittelten umzusetzende Beschleunigung des eigenen Fahrzeugs in der ersten Stufe der zweistufigen Beschleunigungsstrategie ist, und das Kriterium erfüllt ist, wenn die Beschleunigung des Zielobjekts größer als die ermittelte umzusetzende Beschleunigung des eigenen Fahrzeugs in der ersten Stufe der zweistufigen Beschleunigungsstrategie ist.

5. Fahrerassistenzsystem nach einem der Ansprüche 3 oder 4, **dadurch gekennzeichnet, dass** in der ersten Stufe der zweistufigen Beschleunigungsstrategie bei Erkennen eines vorausfahrenden relevanten Zielobjekts, das ein den Grad der Beschleunigung charakterisierendes Kriterium erfüllt, eine größere Beschleunigung umsetzbar ist, als bei nicht vorhandenem Zielobjekt oder bei vorhandenem Zielobjekt, das ein den Grad der Beschleunigung charakterisierendes Kriterium nicht erfüllt.

6. Fahrerassistenzsystem nach einem der Ansprüche 3, 4 oder 5, **dadurch gekennzeichnet, dass** bei Erkennen eines vorausfahrenden relevanten Zielobjekts, das ein den Grad der Beschleunigung charakterisierendes Kriterium erfüllt, die ermittelte erste Stufe der Beschleunigungsstrategie derart ermittelt oder angepasst wird, dass eine früherer Umsetzungsbeginn (b12) der Beschleunigungsstrategie und/oder eine größere Beschleunigung bis zum Erreichen des vorausliegenden Ereignisses vorgegeben und veranlasst wird, als bei nicht vorhandenem Zielobjekt oder bei vorhandenem Zielobjekt, das ein den Grad der Beschleunigung charakterisierendes Kriterium nicht erfüllt.

7. Fahrerassistenzsystem nach Anspruch 5 oder 6, **dadurch gekennzeichnet, dass** die maximal zugelassene Beschleunigung und/oder die vorgegebene und veranlasste größere Beschleunigung bei Erkennen eines vorausfahrenden relevanten Zielobjekts, das ein den Grad der Beschleunigung charakterisierendes Kriterium erfüllt, in Abhängigkeit weiterer Parameter, insbesondere in Abhängigkeit von einem gewählten Fahrmodus (s) und/oder der Distanz des Zielobjekt zum vorausliegenden Ereignisses und/oder der Zeitdauer, bis das Zielobjekt das vorausliegende Ereignis erreicht und/oder der Differenzgeschwindigkeit zwischen dem Kraftfahrzeug und dem Zielobjekt und/oder der Differenzbeschleunigung zwischen dem Kraftfahrzeug und dem Zielobjekt vorgegeben wird.

8. Fahrerassistenzsystem nach einem der Ansprüche 3 -7, **dadurch gekennzeichnet, dass** bei Erkennen eines vorausfahrenden relevanten Zielobjekts, das ein den Grad der Beschleunigung charakterisierendes Kriterium erfüllt, ein größerer Geschwindigkeitsbetrag zugelassen ist und/oder vorgebbar ist, als bei nicht vorhandenem Zielobjekt oder bei vorhandenem Zielobjekt, das ein den Grad der Beschleunigung charakterisierendes Kriterium nicht erfüllt.

9. Fahrerassistenzsystem nach Anspruch 8, **dadurch gekennzeichnet, dass** der Geschwindigkeitsbetrag bei Erkennen eines vorausfahrenden relevanten Zielobjekts, das ein den Grad der Beschleunigung charakterisierendes Kriterium erfüllt, in Abhängigkeit weiterer Parameter, insbesondere in Abhängigkeit von einem gewählten Fahrmodus (s) und/oder der Distanz des Zielobjekt zum vorausliegenden Ereignisses und/oder der Zeitdauer, bis das Zielobjekt das vorausliegende Ereignis erreicht und/oder der Differenzgeschwindigkeit zwischen dem Kraftfahrzeug und dem Zielobjekt und/oder der Differenzbeschleunigung zwischen dem Kraftfahrzeug und dem Zielobjekt vorgegeben wird.

## Claims

1. A driver assistance system in a motor vehicle, comprising:
- a sensing system for detecting events which lie ahead and which permit an increase in the current speed owing to cancellation of a currently valid speed limitation; and
- a functional unit for determining an at least two-stage acceleration strategy for increasing the speed, wherein the first stage of the acceleration strategy is implementable at maximum up to the location of the event lying ahead, and the second stage of the acceleration strategy is implementable at the earliest starting from the location of the event lying ahead, and the implementation is started at a defined time and/or location before the event lying ahead is reached, if the implementation of the acceleration strategy is permitted,
**characterised in that**, in the first stage of the two-stage acceleration strategy, the acceleration profile (A, B1, B2) which is to be implemented is determined and/or brought about depending on a detected defined acceleration behaviour of a relevant target object travelling ahead,
**in that**, at the location of the event (vE) lying ahead, the speed limitation which is cancelled there is exceeded by a predefined speed value, the speed value being predefined depending on the defined acceleration behaviour of the target object which is travelling ahead, until the relevant location is reached.

2. A driver assistance system according to claim 1, **characterised in that** in the first stage of the two-stage acceleration strategy, the acceleration profile (A, B1, B2) which is to be implemented is determined and/or brought about depending on the defined acceleration behaviour of a target object travelling ahead, during a defined time interval and/or distance interval before the event lying ahead (vE) is reached.

3. A driver assistance system according to one of the preceding claims, **characterised in that** a defined acceleration behaviour of the target object travelling ahead is detected when a relevant target object which is travelling ahead and which satisfies a criterion characterising the degree of acceleration is detected.

4. A driver assistance system according to claim 3, **characterised in that** a criterion characterising the degree of acceleration is the relative acceleration of the target object with respect to the determined acceleration, to be implemented, of the vehicle in question in the first stage of the two-stage acceleration strategy, and the criterion is satisfied if the acceleration of the target object is higher than the determined acceleration, to be implemented, of the vehicle in question in the first stage of the two-stage acceleration strategy.

5. A driver assistance system according to one of claim 3 or 4, **characterised in that**, in the first stage of the two-stage acceleration strategy, when a relevant target object which is travelling ahead and which satisfies a criterion characterising the degree of acceleration is detected, a higher acceleration is implementable than when a target object is not present or when a target object which does not satisfy a criterion characterising the degree of acceleration is present.

6. A driver assistance system according to one of claim 3, 4 or 5, **characterised in that**, when a relevant target object which is travelling ahead and which satisfies a criterion characterising the degree of acceleration is detected, the determined first stage of the acceleration strategy is determined or adapted such that an earlier start of implementation (b12) of the acceleration strategy and/or a higher acceleration up to the point when the event which lies ahead is reached is predefined and brought about than when a target object is not present or when a target object which does not satisfy a criterion characterising the degree of acceleration is present.

7. A driver assistance according to claim 5 or 6, **characterised in that** the maximum permitted acceleration and/or the higher acceleration which has been predefined and brought about when a relevant target object which is travelling ahead and which satisfies a criterion characterising the degree of acceleration is detected is predefined depending on further parameters, in particular depending on a selected driving mode (s) and/or the distance of the target object from the event lying ahead and/or the time until the target object reaches the event lying ahead and/or the difference in speed between the motor vehicle and the target object and/or the difference in acceleration between the motor vehicle and the target object.

8. A driver assistance system according to one of claims 3-7, **characterised in that**, when a relevant target object which is travelling ahead and which satisfies a criterion characterising the degree of acceleration is detected, a higher speed value is permitted and/or can be predefined than when a target object is not present or when a target object which does not satisfy a criterion characterising the degree of acceleration is present.

9. The driver assistance system according to claim 8, **characterised in that**, when a relevant target object which is travelling ahead and which satisfies a criterion characterising the degree of acceleration is detected, the speed value is predefined depending on further parameters, in particular depending on a selected driving mode (s) and/or the distance of the target object from the event lying ahead and/or the time until the target object reaches the event lying ahead and/or the difference in speed between the motor vehicle and the target object and/or the difference in acceleration between the motor vehicle and the target object.

## Revendications

1. Système d'aide à la conduite dans un véhicule automobile comprenant :
- un système de saisie pour reconnaître des événements en amont qui, du fait de la suppression de la limitation de vitesse actuelle valable à ce moment, permettent d'augmenter cette vitesse actuelle, et
- une unité fonctionnelle pour déterminer une stratégie d'accélération au moins à deux étages pour augmenter la vitesse, le premier étage de la stratégie d'accélération étant applicable au maximum jusqu'à l'endroit de l'événement en amont et le second étage de la stratégie d'accélération étant applicable au plus tôt à partir de l'endroit de l'événement en amont, et
l'application est démarrée à un instant défini et/ou à un endroit avant d'atteindre l'événement en amont, si l'application de la stratégie d'accélération est autorisée,
système **caractérisé en ce que**
dans le premier étage de la stratégie d'accélération à deux niveaux, on détermine et/ou on lance le profil d'accélération à appliquer (A, B1, B2) en fonction du procédé d'accélération défini, reconnu, d'un objet-cible caractéristique, en amont,
à l'endroit de l'événement en amont (vE), on dépasse la limitation de vitesse qui, à cet endroit, est supprimée pour dépasser un degré de vitesse prédéfini,
le degré de vitesse étant prédéfini en fonction du comportement d'accélération défini de l'objet-cible en amont jusqu'à atteindre l'emplacement caractéristique.

2. Système d'aide à la conduite selon la revendication 1,
**caractérisé en ce que**
dans le premier niveau de la stratégie d'accélération à deux niveaux, on détermine et/ou on lance le profil d'accélération à appliquer (A, B1, B2) en fonction du comportement en accélération, défini, d'un objet-cible en amont pendant un intervalle de temps et/ou de trajet défini avant d'atteindre l'événement amont (vE).

3. Système d'aide à la conduite selon l'une des revendications précédentes,
**caractérisé en ce qu'**
on connaît un comportement d'accélération défini de l'objet-cible en amont en reconnaissant un objet-cible caractéristique en amont et qui remplit un critère caractérisant le degré d'accélération.

4. Système d'aide à la conduite selon la revendication 3,
**caractérisé en ce qu'**
un critère caractérisant le degré d'accélération est l'accélération relative de l'objet-cible pour déterminer l'accélération appliquée au propre véhicule dans le premier niveau de la stratégie d'accélération à deux niveaux, et
le critère est rempli si l'accélération de l'objet-cible est supérieure à l'accélération déterminée, qui doit être appliquée au propre véhicule dans le premier niveau de la stratégie d'accélération à deux niveaux.

5. Système d'aide à la conduite selon la revendication 3 ou 4,
**caractérisé en ce que**
dans le premier niveau de la stratégie d'accélération à deux niveaux, lorsqu'on reconnaît un objet-cible caractéristique en amont, qui remplit le critère caractérisant le de degré d'accélération, on applique une accélération plus grande que pour un objet-cible qui n'est pas en amont ou pour l'objet cible en amont qui ne remplit pas le critère caractérisant le degré d'accélération.

6. Système d'aide à la conduite selon l'une des revendications 3, 4 ou 5,
**caractérisé en ce qu'**
en reconnaissant un objet-cible caractéristique en amont qui remplit le critère caractérisant le degré de l'accélération, on détermine ou on adapte le premier niveau déterminé de la stratégie d'accélération pour prédéfinir et avoir un début d'application antérieure (b12) de la stratégie d'accélération et/ou une plus grande accélération jusqu'à atteindre l'événement en amont qu'en l'absence d'objet-cible ou en cas d'objet-cible qui ne remplit pas un critère caractérisant le degré de l'accélération.

7. Système d'aide à la conduite selon la revendication 5 ou 6,
**caractérisé en ce qu'**
on prédéfinit l'accélération maximale autorisée et/ou l'accélération la plus grande appliquée lors de la détection d'un objet-cible caractéristique en amont qui remplit un critère caractérisant le degré d'accélération, en fonction d'autres paramètres, notamment en fonction d'un mode de conduite (s), sélectionné et/ou de la distance de l'objet-cible par rapport à l'événement prévisible et/ou de la durée jusqu'à ce que l'objet cible atteigne l'événement en amont et/ou de la vitesse différentielle entre le véhicule automobile et l'objet-cible et/ou l'accélération différentielle entre le véhicule et l'objet-cible soient prédéfinies.

8. Système d'aide à la conduite selon l'une des revendications 3 à 7,
**caractérisé en ce qu'**
en reconnaissant un objet-cible caractéristique en amont qui remplit le critère caractérisant le degré de l'accélération, on autorise et/ou on prédéfinit une part de vitesse plus élevée qu'en l'absence d'objet-cible ou en cas d'objet-cible existant mais qui ne remplit pas le critère caractérisant le degré d'accélération.

9. Système d'aide à la conduite selon la revendication 8,
**caractérisé en ce que**
la part de la vitesse est prédéfinie lorsqu'on reconnaît un objet-cible caractéristique en amont, remplit un critère caractérisant le degré de l'accélération, en fonction d'autres paramètres, notamment en fonction d'un mode de conduite (s) sélectionné et/ou de la distance de l'objet-cible par rapport à l'événement en amont et/ou de la durée jusqu'à ce que l'objet-cible atteigne l'événement en amont et/ou de la vitesse différentielle entre le véhicule et l'objet-cible et/ou l'accélération différentielle entre le véhicule et l'objet-cible.
